(19) Europäisches Patentamt
European Patent Office
Office européen des brevets

(11) **EP 1 785 701 A1**

(12) **EUROPEAN PATENT APPLICATION**

(43) Date of publication:
**16.05.2007 Bulletin 2007/20**

(51) Int Cl.:
**G01F 23/296** (2006.01)  **G01K 11/24** (2006.01)

(21) Application number: **05024730.3**

(22) Date of filing: **11.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Siemens Milltronics Process Instruments Inc.**
**ON K9J 7B1 Peterborough (CA)**

(72) Inventors:
• **Lyon, George Quinton**
  **Peterborough K9K 1T9 (CA)**
• **Preston, Nigel Ashley**
  **Peterborough K9J 4V6 (CA)**

(74) Representative: **Berg, Peter**
**European Patent Attorney,**
**Siemens AG,**
**Postfach 22 16 34**
**80506 München (DE)**

(54) **Apparatus and method for determining a temperature of a volume of gas**

(57) An apparatus and method for measuring temperature of a volume of gas (18), such as air. The apparatus and method comprises determining a time of flight for an energy pulse (105) propagated in the volume of gas (18) between a transducer (102) and a reflector (110) located at a distance (112) from the transducer (102). The temperature is calculated based on the time of flight and the distance (112).

**FIG. 1**

**Description**

FIELD OF THE INVENTION

The present invention relates to an apparatus and method for determining a temperature of a volume of gas.

BACKGROUND OF THE INVENTION

Pulse-echo ranging systems, also known as time-of-flight ranging systems, are often used in level sensing and level measurement applications. Pulse-echo ranging systems determine the distance to a reflective surface (i.e. reflector) by measuring the length of time following a transmission of a burst of energy pulses that an echo or reflected pulse is received.

The velocity of a wave traveling to and from a reflective surface is equal to the quotient of the total distance that the wave has traveled divided by the total time that it traveled. Using this relationship, the distance can be calculated if the velocity and time are known.

Temperature of a volume of gas (for example, air) in a vessel is also a parameter of interest for making distance or level measurements using an ultrasonic pulse echo instrument. The velocity of an ultrasonic or acoustic wave through a gas is affected by temperature. As a result, the distance or level measurement becomes a function of temperature, and temperature needs to be taken into account to provide accurate ranging measurements.

Proximity emperature sensors such as thermistors, thermocouples or diodes are, however, only useful in sensing the temperature in the proximity of the sensor and cannot accurately sense the temperature over the volume of gas in the storage vessel. Since the temperature in the proximity of the sensor is not necessarily representative of the temperature over the volume of air through which the energy pulses travel, the use of proximity temperature sensors can lead to inaccurate measurements.

In view of the state of the art, there is a need for new and improved mechanism for determining temperature in a vessel or a volume of a gas.

SUMMARY OF THE INVENTION

The present invention provides an apparatus for determining a temperature of a volume of gas as defined in claim 1.

The present invention further provides a method for determining a temperature of a volume of gas as defined in claim 9.

Preferred embodiments of the apparatus and the method according to the invention are specified in the remaining claims.

BRIEF DESCRIPTION OF THE DRAWINGS

Reference will now be made to the accompanying drawings which show, by way of example, embodiments of the present invention, and in which:

Fig. 1 shows in diagrammatic form a temperature sensor device according to an embodiment of the present invention;

Fig. 2 is a schematic diagram of an implementation of the temperature sensor device of Fig. 1;

Fig. 3 is a flowchart of a method of determining the temperature of a volume of gas according to an embodiment of the present invention;

Fig. 4 is a flowchart of a method for calibrating a temperature sensor device according to an embodiment of the present invention; and

Fig. 5 is a schematic diagram showing a power supply for the temperature sensor according to another embodiment of the present invention.

DETAILED DESCRIPTION OF EMBODIMENTS OF THE INVENTION

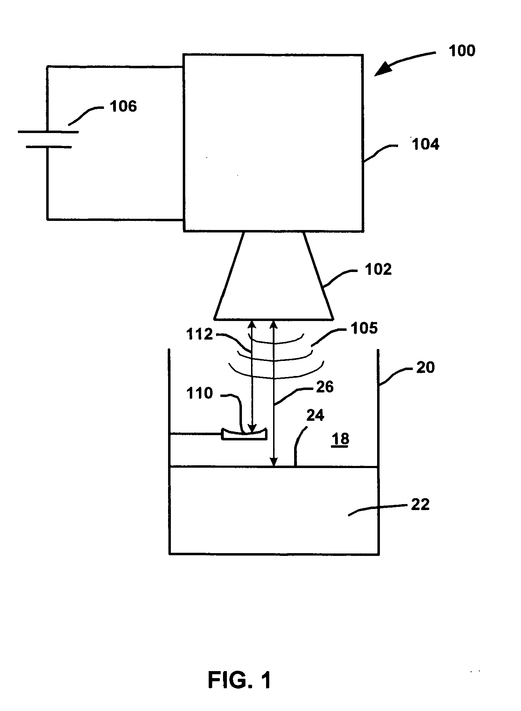

Reference is first made to Fig. 1, which shows in diagrammatic form a temperature sensor device according to an embodiment of the present invention. The temperature sensor device indicated generally by reference 100. The temperature sensor device 100 includes a power supply 106. The power supply 106 is described in more detail below according to another embodiment of the invention.

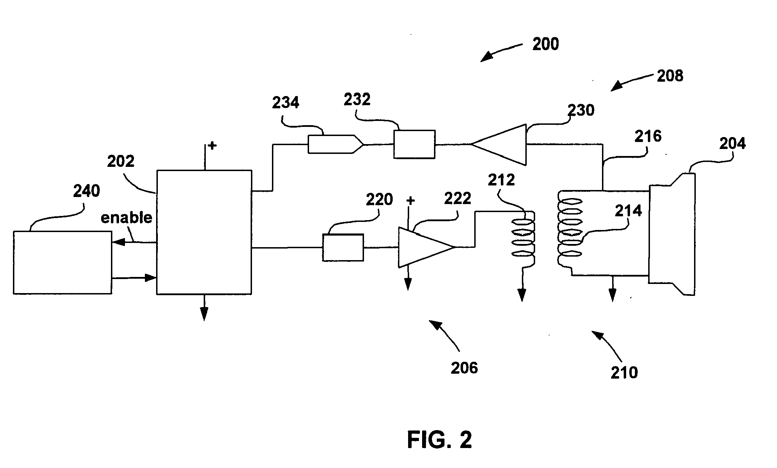

The temperature sensor device 100 comprises a time-of-flight ranging mechanism and includes a transducer 102 and circuitry 104 for controlling the transducer 102 and performing temperature measurements. An embodiment of the temperature sensor device is described in more detail below with reference to Fig. 2. The temperature sensor device 100 is installed on a vessel or storage tank 20. In a level measurement application, the vessel 20 holds a material 22, for example, a liquid, slurry or granular material. The material 22 has a top surface 24 which corresponds to the level of the material 22 in the vessel 20. The volume above the surface 24 of the material 22 is occupied by a gas 18, for example, air, or other type of gaseous vapours or inert gases.

As shown in Fig. 1, the temperature sensor device 100 includes a reflector 110. The reflector 110 is installed or mounted inside the vessel 20. The reflector 110 is positioned at a known distance or distance that can be determined and maintained as a constant. The distance between the transducer 102 and the reflector 110 is indicated by reference 112. As depicted in Fig. 1, the reflector 110 is mounted in line or substantially in line with the transducer 102. Such an arrangement provides a substantially direct path between the reflector 110 and the transducer 102. As will be described in more detail with reference to Fig. 2, the temperature sensor device 100 includes a microprocessor which is suitably programmed to perform time-of-flight like operations such as emitting one or more transmit pulses 105 from the transducer 102 and detecting or receiving the reflected or echo pulses reflected by the reflector 110. The distance 112 between the reflector 110 and the transducer 102 is selected so that the transmitted and reflected echo pulses travel through a given volume of the gas 18 (i.e. air), for example, above the surface 24 of the material 22 in a level measurement application, or through a substantial volume of the gas 18 where the vessel 20 comprises a storage vessel. For a level measurement application (e.g. the temperature sensor device 100 is integrated with a pulse-echo ranging system), the distance between the transducer 102 and the surface 24 of the material 20 is denoted by reference 26.

As will be described in more detail below, the microprocessor is programmed to determine the temperature of the gas 18 from the relationship between the velocity of the pulses 105 propagating through the gas 18 to and from the reflector 110 which is located at a known or constant distance denoted by reference 112 in Fig. 1. Velocity for the speed of sound traveling in a gas is determined by

$$v_{sound} = (\gamma RT/M)^{1/2} \quad \text{(equation 1),}$$

where
R is the universal gas constant, i.e. 8.314 $JK^{-1}mol^{-1}$,
T is the absolute temperature,
M is the molecular weight of the gas in kg/mol and
$\gamma$ is the adiabatic constant, characteristic of the specific gas.

Velocity or speed is calculated in general by

$$v_{sound} = d/t \quad \text{(equation 2),}$$

where
d is distance of travel (i.e. 2 x distance to the reflector) and
t is time of travel.

Combining equations 1 and 2 gives equation 3 as follows:

$$(\gamma RT/M)^{1/2} = d/t \quad \text{(equation 3).}$$

Since the parameters $\gamma$, R, and M are constants, and the distance 112 (Fig. 1) to the reflector 110 and back (i.e. 2 x distance 112 in Fig. 1) is fixed or known, the square root of the temperature is inversely proportional to the time taken for the transmitted signal to be received back again (i.e. reflected) at the transducer 102. In other words, temperature T can be calculated according to the time of flight measurement by

$$T = (d^2M)/(t^2\gamma R) \qquad (equation\ 4).$$

The distance d becomes a constant when the reflector 110 is located at a known distance from the transducer 102. If the distance d is not known, then the above equation may used to determine the distance d, if the time-of-flight t is measured and the temperature T is measurable, for example, using a proximity temperature sensor. The proximity temperature sensor may comprise any suitable temperature measurement component or device, such as, a thermistor, a thermocouple or diode-based device.

Reference is next made to Fig. 2, which shows an implementation of the temperature sensor device 100 of Fig. 1 according to an embodiment of the invention and indicated generally by reference 200. As shown, the temperature sensor device 200 comprises a microprocessor 202, a transducer 204, a transmitter module 206, a receiver module 208 and a transformer 210. The transformer 210 comprises a step-up transformer and has a primary winding 212 and a secondary winding 214.

The transmitter module 206 comprises an oscillator 220 and a power amplifier 222. The oscillator 220 has an input port which is coupled to an output port on the microprocessor 202, and under the control of a function or routine, the microprocessor 202 generates an output signal to enable/disable operation of the oscillator 220. The oscillator 220 has an output which is coupled to the input of the power amplifier 222. The power amplifier 222 has an output which is coupled to the primary winding 212 of the transformer 210. As shown, the second winding 214 of the transformer 210 is coupled to the input/output port of the transducer 204.

The receiver module 208 comprises a receiver amplifier 230, an envelope detector 232, and analog-to-digital converter 234. The receiver amplifier 230 has an input port and an output port. The input port is coupled to the secondary winding 214 of the transformer 210, and the output port is coupled to the input port of the envelope detector 232. The envelope detector 232 has an output which is coupled to the input of the analog-to-digital or A/D converter 234. The output of the A/D converter 234 is coupled to an input (i.e. digital) port on the microprocessor 202.

To perform a temperature measurement, microprocessor 202 includes a code component (i.e. a function or routine encoded as executable instructions stored in program memory as firmware or software) which generates an enable signal for enabling operation of the oscillator 220. The microprocessor 202 under stored program control starts a timer to track the elapsed time, and in response to the enable signal, the oscillator 222 generates an output AC signal or waveform at a given frequency. The power amplifier 224 is provided to amplify and increase the power of the output AC signal. The amplified output signal is less susceptible to attenuation and noise. The power amplifier 224 may be implemented as a bipolar transistor or using an integrated amplifier. The step-up transformer 210 also serves to step-up or increase the voltage level of the output AC signal prior. The output AC signal from the secondary winding 214 of the transformer 210 is applied to the transducer 204. By driving the transducer 204 with power amplifier 224 and the transformer 210, a burst of ultrasound acoustic waves (e.g. as denoted by reference 105 in Fig. 1) is emitted.

As depicted in Fig. 1, the transmit burst of ultrasound waves 105 propagate from the transducer 102 in the direction of the reflector 110 and the surface 24 of the material 22. The reflector 110 reflects the ultrasound waves 105 back towards the transducer 102. The transducer 102 couples the reflected ultrasound waves, i.e. the echo pulse, and converts the acoustic signals into a corresponding electrical signal or signals. As shown in Fig. 2, the output of the transducer 204 is coupled by the secondary winding 214 of the transformer 210. As shown, the secondary winding 214 includes a tap 216 which is coupled to the input of the receiver amplifier 230. The receiver amplifier 230 amplifies the electrical signal corresponding to the reflected waveform or echo pulse. The envelope detector 232 may be implemented as a logarithmic device which conditions the amplified signal and produces an output signal comprising the envelope of the electrical signal. The analog envelope signal is then converted into a digital signal by the A/D converter 234 and inputted by the microprocessor 202. The microprocessor 202 includes firmware or software for performing time-of-flight measurements implemented as one or more code components. The components comprise code for generating an echo profile, code for ascertaining one or more echo pulses in the echo profile and code for determining a time-of-flight measurement for the echo pulse(s). The particular implementation of the firmware or software for performing the time-of-flight calculations will be within the understanding of one skilled in the art.

The time-of-flight measurement provides a value for the variable t in equation (4) above. The temperature T is then determined from equation (4) given that the distance d to the reflector 110 is known, and the adiabatic constant of the gas 18 is also known. The microprocessor 202 includes a code component for executing equation (4) and calculating a temperature for the gas 18.

As shown in Fig. 2, the temperature sensor device 200 may include a proximity temperature sensor indicated by reference 240. If the distance to the reflector is unknown, the proximity temperature sensor 240 can be utilized to determine the distance. For example, the microprocessor 202 may include a code component for executing equation (3) or (4) above, where the proximity temperature sensor 240 provides a temperature reading value for parameter "T" in equation (3) or (4). The other variable, i.e. the time-of-flight "t" corresponding to the reflector 110 (Fig. 1) is determined as described above. The remaining parameters, for example, the adiabatic constant, are known or determinable as constants.

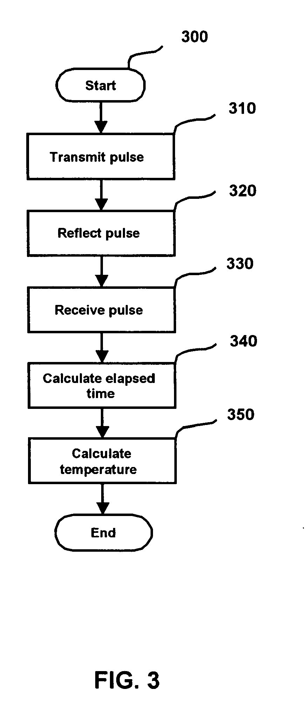

Reference is now made to Fig. 3 which shows a flowchart of a method of determining the temperature of a volume of air according to the present invention. The method is generally indicated by reference 300 and comprises the following steps as will be described.

First in step 310, under the control of the microprocessor 202 (Fig. 2), a pulse is transmitted by the transducer 204 (Fig. 2) in the direction of the reflector 110 (Fig. 1). For example, the firmware or software for the microprocessor 202 includes a code component for generating a transmit pulse as described above. As indicated in step 320, the transmit pulse is reflected by the reflector 110 resulting in reflected or echo pulse which propagates back in the direction of the transducer 204. In the step 330, the reflected or echo pulse is received by the transducer 204 and converted into an electrical signal which is processed by the receive module 208 (Fig. 2) and converted into a digital signal for further processing (e.g. echo processing) by the microprocessor 202. As described above, the microprocessor 202 determines the elapsed or time of flight for transmit/echo pulse. The elapsed time may be determined using time of flight or echo ranging techniques as described above coded in firmware. The elapsed time may also be determined using or any other suitable techniques. Finally, in step 350, the temperature of the volume of air is calculated. The temperature of a volume of air is calculated by the microprocessor executing a code component which solves equation (4). As described above, this calculation involves knowing the distance between the transducer 102 (Fig. 1) and the reflector 110 (Fig. 1). According to another embodiment of the invention, a calibration procedure is executed in order to determine the distance between the transducer 102 and the reflector 110.

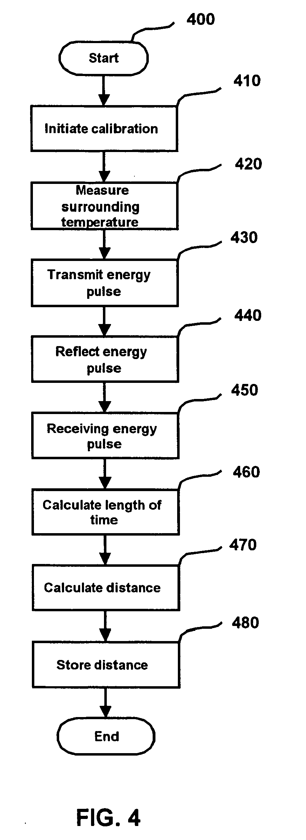

Reference is now made to Fig. 4 which shows in flowchart form, a method for calibrating a temperature sensor system according to another embodiment the present invention and indicated generally by reference 400. The calibration procedure 400 is used for example, to determine the distance between the transducer 102 (Fig. 1) and the reflector 110 (Fig. 1) where the distance is not known, or where the distance is known to calibrate or verify the known distance value (which is stored as a parameter in memory for use by the microprocessor).

The first operation in step 410 involves a condition for initiating a calibration sequence. This condition may require a particular input to be applied to the microprocessor 202 (Fig. 2). Alternatively, this condition could require the polarity on the power supply 106 (Fig. 1) to be reversed, a certain fixed voltage to be applied, a signal applied to the power supply line, and an additional connection or input that is unused during normal operation. In this case, when a reverse polarity is detected, the calibration sequence is initiated under the control of the microprocessor 202. Next in step 420, the temperature of the surrounding gas is measured using the proximity sensor 240 (Fig. 2). This temperature may be stored in memory which is accessible by the microprocessor 102. It is to be appreciated that while the temperature measurement is shown as step 420, this operation may be performed as a later step in the process, for example, at any point prior to step 470. Next in step 430, a pulse is transmitted by the transducer 102 (Fig. 1) in the direction of the reflector 110 (Fig. 1) under the control of the microprocessor 202 (Fig. 2) operating under stored program control. Next in step 440, the transmit pulse is reflected by the reflector 110 (Fig. 1) and the reflected or echo pulse propagates in the direction of the transducer 102 (Fig. 1). In step 450, the reflected or echo pulse is received by the transducer 204 (Fig. 2) and converted into an electrical signal which processed and digitized by the receive module 208 (Fig. 2). The digitized signal is then processed by a code component in the microprocessor 202 to determine an elapsed time between transmission of the transmit pulse and reception of the echo pulse as indicated in step 460. As described above, this calculation may be performed using an echo profile and time-of-flight processing techniques encoded in firmware and executed by the microprocessor 202 (Fig. 2). Next in step 470, a calculation is made to determine the distance between the reflector 110 and the transducer 102. As described above, the distance calculation is based on equation (3) or (4), i.e. the distance calculation is based on the temperature measurement, and the elapsed time (e.g. time of flight) between transmission of the transmit pulse and reception of the reflected echo pulse. Finally in step 480, the determined distance value is stored in memory and made accessible to the microprocessor 202 for performing the temperature measurement function as described above.

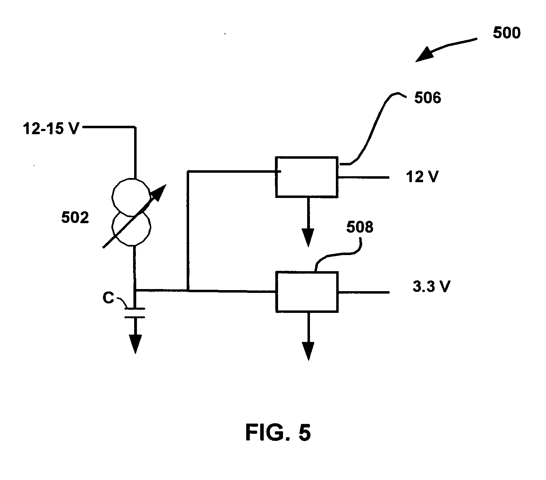

Reference is next made to Fig. 5, which shows a power supply according to another embodiment of the present invention. The power supply is indicated generally by reference 500 and comprises a current source 502, a capacitor C, a first voltage regulator module 506 and a second voltage regulator module 508. These components are connected as shown in Fig. 5. The power supply 500 is configured with an energy storage device, i.e. the capacitor C, so that the power is only drawn when needed for a measurement, and in between measurements, the capacitor C stores energy after being replenished by the current source 502. Because the temperature of the volume of gas (e.g. air) in the vessel is unlikely to change rapidly in most cases, the measurement interval can be long, for example one measurement every 30 to 60 seconds, and with the configuration for the power supply 500, the current drawn is quite small, typically less than 1 mA.

According to another embodiment of the present invention in a level sensing or level measurement application, the temperature sensor device 100 (Fig. 1) may be integrated with a pulse-echo ranging device to emit pulses or energy waves 105, for example ultrasonic pulses, from the transducer 102 (Fig. 1). The pulses propagate towards the material 22 and are reflected by the surface 24 of the material 22. The pulse-echo ranging device includes a microprocessor or microcontroller which is suitably programmed to determine a distance 26 to the surface of the material 24 based on the time of flight for the transmitted and reflected pulse 105. The distance 26 to the surface 24 is then used to determine the level of the material 22 contained in the vessel 20. The microprocessor is also suitably programmed to perform the temperature measurement calculations as described above.

**Claims**

1. An apparatus for determining a temperature of a volume of gas (18), said apparatus comprising:

   a transducer (102, 204) for emitting an energy pulse (105) and receiving an echo pulse;
   a reflector (110) placed at a distance (112) from said transducer (102, 204) for reflecting said energy pulse (105); a controller (104) coupled to said transducer (102, 204), said controller (104) including a transmitter module (206) for controlling said transducer (102, 204), and said controller (104) including a receiver module (208) for receiving the output of said transducer (102, 204) corresponding to the echo pulse;
   said controller (104) including a component (202) for determining a time-of-flight for said echo pulse;
   said controller (104) further including a component for determining the temperature of the volume of gas (18), said component being responsive to said time-of-flight and said distance (112); and
   a power supply (106, 500) coupled to the controller (104).

2. The apparatus as recited in claim 1, further comprising:

   a temperature measurement device (240), said temperature measurement device (240) being coupled to said controller (104) and generating an output indicative of the temperature of the volume of gas (18), said controller (104) including a calibration component responsive to said output.

3. The apparatus as recited in claim 2, wherein the temperature measurement device (240) comprises a component selected from the group consisting of thermocouple, a thermister and a resistance-based temperature device.

4. The apparatus as recited in claim 2 or 3, wherein said calibration component calculates a value corresponding to the distance between said transducer (102, 204) and said reflector (100), said distance value being based on the

5. The apparatus as recited in one of the preceding claims, wherein said power supply (106, 500) includes an energy storage device (C), a device (502) coupled to said energy storage (C) device for replenishing said energy storage device (C) after a temperature measurement operation, and voltage regulator (506, 508) having an input coupled to said energy storage device (C) and an output for outputting a supply voltage.

6. The apparatus as claimed one of the preceding claims, wherein said component for determining the temperature of the volume of gas includes execution of a relationship given as:

$$T = (d^2 M) / (t^2 \gamma R)$$

   where:

   T is temperature,
   R is the universal gas constant,
   M is the molecular weight of the gas (18),
   $\gamma$ is the adiabatic constant of the gas (18),
   d is twice the distance between the transducer (102, 204) and the reflector (110), and
   t is the time-of-flight.

7. The apparatus as claimed in claim 2, wherein said calibration component comprises execution of a relationship given as:

$$d = t * (\gamma RT/M)^{1/2}$$

where:

T is the measured temperature,
R is the universal gas constant,
M is the molecular weight of the gas (18),
$\gamma$ is the adiabatic constant of the gas (18),
d is twice the calculated distance between the transducer (102, 204) and the reflector (110), and
t is the time-of-flight.

8. The apparatus as claimed in claim 2, wherein said calibration component is responsive to input corresponding to polarity reversal on said power supply (106, 500) for initiating a calibration operation.

9. A method for determining the temperature in a volume of gas, said method comprising the steps of:

transmitting an energy pulse (105) using a transducer (102, 204);
reflecting the energy pulse (105) using a reflector(110) located at a distance (112) from said transducer (102, 204); receiving the reflected energy pulse;
calculating an elapsed time between the transmission of the energy pulse (115) and the reception of the reflected energy pulse; and
calculating the temperature based on the elapsed time and a parameter corresponding to twice the distance (112) between the reflector (110) and the transducer (102, 204).

10. The method as recited in claim 9, wherein said step of calculating the temperature comprises executing a relationship given as:

$$T = (d^2 M) / (t^2 \gamma R)$$

where:

T is the temperature,
R is the universal gas constant
M is the molecular weight of the gas (18),
$\gamma$ is the adiabatic constant of the gas (18),
d is twice the distance (112) between the transducer (102, 204) and the reflector (110), and
t is the time-of-flight.

**FIG. 1**

FIG. 2

FIG. 3

400

Start

410

Initiate calibration

420

Measure
surrounding
temperature

430

Transmit energy
pulse

440

Reflect energy
pulse

450

Receiving energy
pulse

460

Calculate length of
time

470

Calculate distance

480

Store distance

End

**FIG. 4**

**FIG. 5**

**European Patent Office**

**EUROPEAN SEARCH REPORT**

Application Number

EP 05 02 4730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 595 082 A (PARK H. MILLER JR) 27 July 1971 (1971-07-27) * column 2, line 22 - line 43; figure 1 * * column 7, line 40 - line 63; figure 6 * ----- | 1-10 | INV. G01F23/296 G01K11/24 |
| A | US 4 210 969 A (MASSA, FRANK) 1 July 1980 (1980-07-01) * the whole document * ----- | 1-10 | |
| A | US 5 085 077 A (STAPLETON ET AL) 4 February 1992 (1992-02-04) * column 2, line 58 - column 5, line 9; figure 1 * ----- | 1-10 | |
| A | US 4 470 299 A (SOLTZ ET AL) 11 September 1984 (1984-09-11) * column 4, line 55 - column 5, line 22; figure 1 * ----- | 1-10 | |

TECHNICAL FIELDS SEARCHED (IPC)

G01F
G01K

The present search report has been drawn up for all claims

| Place of search | Date of completion of the search | Examiner |
|---|---|---|
| The Hague | 27 April 2006 | Boerrigter, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 02 4730

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2006

| Patent document cited in search report | | Publication date | Patent family member(s) | Publication date |
|---|---|---|---|---|
| US 3595082 | A | 27-07-1971 | NONE | |
| US 4210969 | A | 01-07-1980 | NONE | |
| US 5085077 | A | 04-02-1992 | NONE | |
| US 4470299 | A | 11-09-1984 | NONE | |